# EUROPEAN PATENT SPECIFICATION

(11) **EP 3 845 896 B1**
(45) Date of publication and mention of the grant of the patent: **01.07.2026**
(21) Application number: 18931730.8
(22) Date of filing: 31.08.2018
(51) Int. Cl.: H01J 49/00, H01J 49/16

(54) **ANALYSIS METHOD, ANALYSIS DEVICE, AND PROGRAM**
ANALYSEVERFAHREN, ANALYSEVORRICHTUNG UND PROGRAMM
PROCÉDÉ D'ANALYSE, DISPOSITIF D'ANALYSE ET PROGRAMME

(43) Date of publication of application: 07.07.2021
(73) Proprietor: SHIMADZU CORPORATION, Kyoto-shi, Kyoto 604-8511 (JP)
(72) Inventor: MURATA, Tasuku, Kyoto-shi, Kyoto 604-8511 (JP); FUJITA Shinjiro, Kyoto-shi, Kyoto 604-8511 (JP)
(74) Representative: Mewburn Ellis LLP
(86) International application number: PCT/JP2018/032477
(87) International publication number: WO 2020/044564

(56) References cited:
- WO-A1-2010/047399
- WO-A1-2016/027319
- WO-A1-2017/154240
- WO-A1-2018/020652
- JP-A- 2000 131 284
- JP-A- 2002 522 647
- JP-A- 2014 044 110
- JP-A- H07 128 317
- US-A1- 2019 267 222
- YUMI HAYASHI ET AL: "[Development of an in vivo real-time monitoring technique by PESI/MS/MS]", vol. 74, no. 1-2, 20 September 2017 (2017-09-20), pages 19 - 26, XP009522555, ISSN: 0371-005X, Retrieved from the Internet <URL:https://www.shimadzu.co.jp/products/tec_news/srv74_12/report03.html>
- OTSUKA YOICHI ET AL: "Scanning probe electrospray ionization for ambient mass spectrometry : SPESI for ambient mass spectrometry", RAPID COMMUNICATIONS IN MASS SPECTROMETRY, vol. 26, no. 23, 16 October 2012 (2012-10-16), GB, pages 2725 - 2732, XP055921123, ISSN: 0951-4198, DOI: 10.1002/rcm.6399
- YUMI HAYASHI, TASUKU MURATA, KAZUMI YOKOTA, KORETSUGU OGATA, HIROSHI TANIHATA, KEI ZAITSU: "Development of an in Vivo Real-Time Monitoring Technique by PESI/MS/MS", SHIMADZU REVIEW, vol. 74, no. 1-2, 20 September 2017 (2017-09-20), pages 19 - 25, XP009522555, ISSN: 0371-005X

## Description

### Technical Field

The present invention relates to an analysis method, an analysis device, and a program.

### Background Art

Mass analysis with use of probe electrospray ionization (PESI) (hereinafter, called PESI mass analysis appropriately) needs no preprocessing, and thus possesses various advantages such as rapid ionization of a sample extracted from a living organism and the like as well as easy comparison of sample components at every position where a probe is inserted.

An PESI ion source for performing the PESI includes a probe with a tip diameter of several hundred nanometers (nm), a displacement unit configured to move at least either the probe or the sample, and a high voltage application unit configured to apply a high voltage of several kV to the probe. In the PESI, displacement by the displacement unit causes the sample to adhere to the probe, and the high voltage application unit applies a high voltage to the probe with the sample adhering thereto. Then, components in the sample are discharged to the ambient atmosphere due to an electrospray phenomenon for ionization. Here, in order to ionize the sample effectively, a high voltage is preferably applied to the probe while the sample is in contact with a solvent (see Patent Literature 1).

In order to take advantage of the characteristics of the PESI, a method of arranging a sample and a solvent in ionization has been proposed. For example, Patent Literature 2 discloses an analysis method for performing PESI while a solvent supply unit configured to accommodate a solvent and having two membrane members is located on a top face of a sample.

### Prior Art Documents

### Patent Literature

Patent Literature 1: International Publication No. 2010/047399
Patent Literature 2: International Publication No. 2017/154240

### Summary of Invention

### Technical Problem

A detection signal obtained through the PESI mass analysis performed on the sample to which the solvent adheres (hereinafter, called solvent-sample detection signals) contains a detection signal associated with sample-derived ions and a detection signal associated with solvent-derived ions. In order to distinguish and analyze the detection signal associated with the sample-derived ions, it is necessary to obtain a detection signal through the PESI mass analysis performed on a solvent not in contact with the sample (hereinafter, called a solvent detection signal), and to perform analyzation based on the solvent-sample detection signal and the solvent detection signal. In the currently-used method, however, after conducting the PESI mass analysis while the sample to which the solvent adheres is arranged in an ionizing unit, it is necessary for a user of an analysis device that performs the PESI mass analysis to change the arrangement in the ionizing unit and to arrange only the solvent in the ionizing unit for the PESI mass analysis. This leads to complicated operation.

### Solution to Problem

An analysis method according to a first aspect of the present invention is an analysis method according to claim 1.

Preferred aspects of the present invention are defined in the dependent claims.

An analysis device according to a second aspect of the present invention is an analysis device according to claim 5.

A program according to a third aspect of the present invention is a program according to claim 6.

### Advantageous Effect of the Invention

With the present invention, analysis of a sample S can be performed rapidly without time and effort while taking advantage of the PESI.

### Brief Description of Drawings

Fig. 1 is a conceptual view of an analysis device concerning an analysis method according to one embodiment.
Fig. 2(A) is a schematic cross-sectional view of a solvent supply unit, Fig. 2(B) is a schematic top view of the solvent supply unit, and Fig. 2(C) is conceptual view for explanation of the analysis method according to the embodiment.
Fig. 3(A) is a conceptual view for explanation of a case where PESI mass analysis is performed to a solvent, and Fig. 3(B) is a conceptual view for explanation of a case where PESI mass analysis is performed to a sample and the solvent.
Fig. 4 is a flow chart of the analysis method according to the embodiment.
Fig. 5(A) is a conceptual view for explanation of a case where PESI mass analysis is performed to a solvent, and Fig. 5(B) is a conceptual view for explanation of a case where PESI mass analysis is performed to a sample and the solvent.
Fig. 6(A) is a schematic top view of a sample plate, Fig. 6(B) and 6(C) are each a schematic side view of the sample plate, and Fig. 6(D) is conceptual view for explanation of opening and closing the sample plate.
Fig. 7(A) is a schematic cross-sectional view of an open sample plate, and Fig. 7(B) is a schematic cross-sectional view of a closed sample plate.
Figs. 8(A), 8(B), and 8(C) are each a conceptual view for explanation of arranging the sample on the sample plate.
Fig. 9(A) is a conceptual view for explanation of a case where PESI mass analysis is performed to a solvent, and Fig. 9(B) is a conceptual view for explanation of a case where PESI mass analysis is performed to a sample and the solvent.
Fig. 10 is a flow chart of an analysis method according to one modification.
Fig. 11 is a conceptual view for explanation of a program.

### Description of Embodiments

The following describes modes for embodying the present invention with reference to drawings.

### First Embodiment

In an analysis method according to one embodiment of the present invention, first mass analysis for ionizing a solvent is performed, and subsequent to the first mass analysis, second mass analysis for ionizing the solvent and a sample is performed.

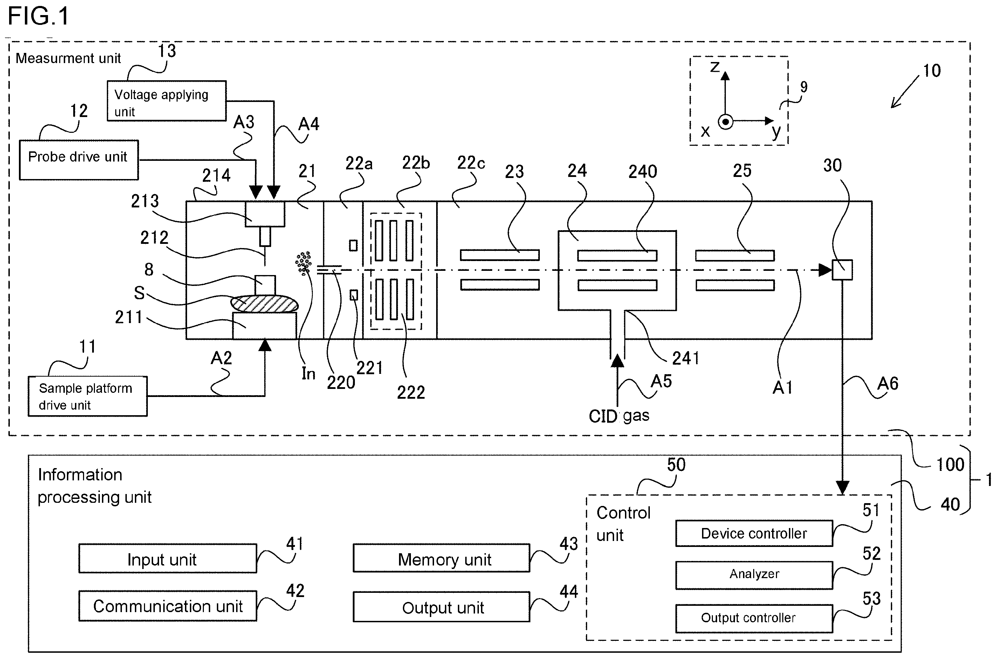

Fig. 1 is a conceptual view of an analysis device configured to perform the first mass analysis and the second mass analysis. An analysis device 1 includes a measurement unit 100 and an information processing unit 40. The measurement unit 100 includes a mass spectrometer 10.

The mass spectrometer 10 includes a sample platform drive unit 11, a probe drive unit 12, a voltage applying unit 13, an ionizing unit 21, a first vacuum chamber 22a with an ion lens 221, a pipe 220 through which ions are guided from the ionizing unit 21 to the first vacuum chamber 22a, a second vacuum chamber 22b with an ion guide 222, and a third vacuum chamber 22c. The ionizing unit 21 includes an ionization chamber 214 in which a sample platform 211 configured to support a sample S on which a solvent supply unit 8 is arranged, a probe 212, and a probe holder 213 are included. The third vacuum chamber 22c includes a first mass separator 23, a collision cell 24, a second mass separator 25, and a detector 30. The collision cell 24 includes an ion guide 240 and a CID gas inlet 241.

The information processing unit 40 includes an input unit 41, a communication unit 42, a memory unit 43, an output unit 44, and a control unit 50. The control unit 50 includes a device controller 51, an analyzer 52, and an output controller 53.

The mass spectrometer 10 performs tandem mass spectrometry to ions In generated by ionizing a substance, attached to the probe 212, in the ionizing unit 21. A path of the ions In (ion optical axis) is schematically indicated by an alternate long and short dashed arrow A1. Hereinafter, unless otherwise specified, it is assumed that a z-axis is parallel to a longitudinal axis direction of the probe 212 (direction from the probe 212 toward the sample S), a y-axis is perpendicular to the z-axis and parallel to the ion optical axis A1, and an x-axis is perpendicular to the z-axis and the y-axis (see coordinate axis 9).

The ionizing unit 21 of the mass spectrometer 10 ionizes the sample S, the solvent and the like arranged in the ionizing unit 21 with use of an electrospray phenomenon. The ionizing unit 21 includes the ionization chamber 214 that is sealable by closing a door, not shown, and is configured such that a user of the analysis device 1 (hereinafter, simply called user) can open the door to operate arrangement of the sample S, the solvent and the like inside thereof. Ionization and mass analysis are preferably performed while the door is closed for stable measurement.

Here, the ionizing unit 21 need not include the ionization chamber 214. The sample S may be ionized in an opened system where the sample S is not encased with a wall or the like. This is because, when a body fluid and the like of a living organism is caused to adhere to the probe 212 for ionization, it is sometimes difficult to arrange the organism in the ionization chamber 214.

The sample platform 211 functions as a sample supporting portion that supports the sample S, and is configured to be driven by a sample platform drive unit 11 provided with a motor and a speed reduction mechanism (arrow A2) such that the sample S is movable in xy-directions. For efficient ionization, a tip diameter of the probe 212 is preferably reduced to several micrometers (nm) to several hundred micrometers (µm), and the tip diameter is more preferably 1pm or less. The probe 212 is supported by the probe holder 213, and is movable in a z-direction. The probe 212 is driven by a probe drive unit 12 provided with a motor and a speed reduction mechanism (arrow A3) to be moved in the z-direction, is inserted into a predetermined depth of the sample S, whereby the sample S adheres thereto, and then is moved in the z-direction to a position facing the pipe 220. When the probe 212 is moved to the position facing the pipe 220, a high voltage of several kV or the like is applied to the probe 212 by the voltage applying unit 13 provided with a directcurrent voltage source and the like (arrow A4), and the voltage causes an electrospray phenomenon to ionize the sample S adhering to the probe 212. Here, polarity of the high voltage applied to the probe 212 is set in accordance with polarity of the ions to be detected.

The sample S is not particularly limited as long as it is solid or liquid and is ionizable by an electrospray phenomenon. Since rapid ionization under atmospheric pressure is performable in the PESI, and in order to take advantage that the sample S obtained from an organism can be immediately analyzed, a biological sample is preferable as the sample S. Here, the term "biological sample" includes a living organism itself, a solid substance such as a tissue section extracted from an organism, bodily fluids such as blood, urine, saliva or gastric juice derived from an organism, the content of organs such as the stomach, and the like.

The solvent is not particularly limited as long as it dissolves or wets the sample S. An aqueous solvent such as water, an organic solvent such as alcohol, or a mixed liquid of water and an organic solvent such as an aqueous ethanol solution can be used. A reagent can be added appropriately if mass analysis is not affected adversely. When the sample S is a biological sample, for example, an anticoagulant drug such as heparin may be added to the solvent to prevent blood coagulation.

Hereinafter, such a case is exemplarily described where the sample S is the liver of a living mouse and ionization is performed by using the solvent supply unit 8 provided with a plurality of membrane members and accommodating a solvent. Reference should be made to Patent Literature 2 for details of the solvent supply unit 8.

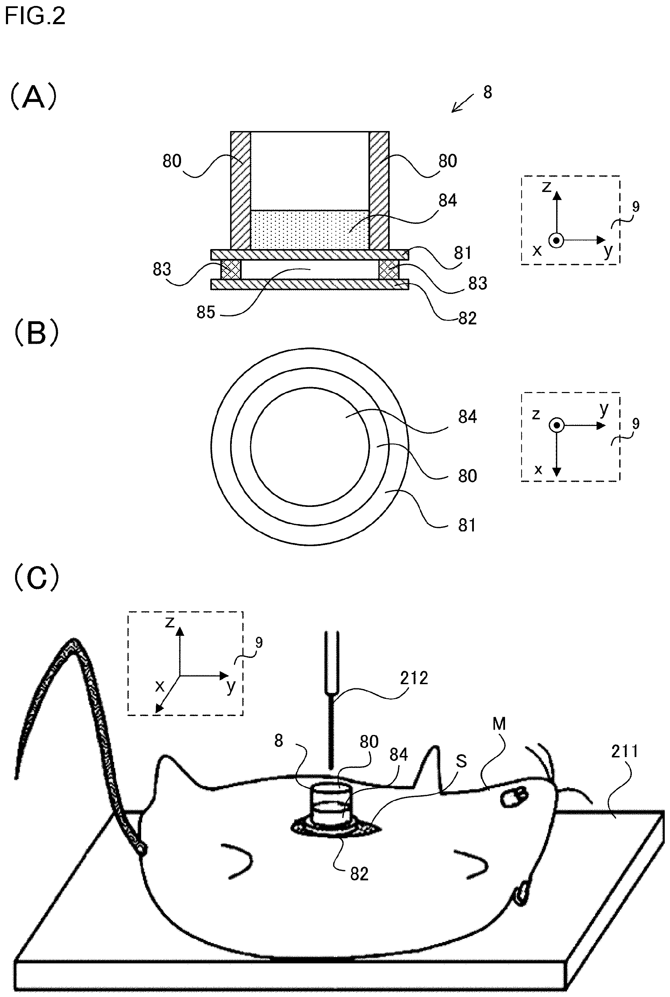

Fig. 2(A) and Fig. 2(B) are a schematic cross-sectional view and a schematic top view of the solvent supply unit 8, respectively. The solvent supply unit 8 includes a cylindrical lateral wall 80, a first membrane member 81, a second membrane member 82, and a spacer 83. An opening at the bottom of the lateral wall 80 is covered with the first membrane member 81. A solvent 84 is held in a space surrounded by the lateral wall 80 and the first membrane member 81. The first membrane member 81 and the second membrane member 82 are arranged substantially in parallel across the spacer 83. The solvent supply unit 8 includes a clearance 85 formed therein and surrounded by the first membrane member 81, the second membrane member 82, and the spacer 83. The spacer 83 is preferably cylindrical, but need not surround an entire lateral side of the clearance 85 (direction parallel to an xy plane). It is more preferable that the spacer 83 is opened partially for allowing release of blood and the like.

The first membrane member 81 and the second membrane member 82 are each made of a membrane member through which the solvent 84 does not pass. The membrane member constituting the first membrane member 81 preferably has such moderate elasticity that, even when an aperture is formed through insertion of the probe 212, the aperture is narrowed to make it difficult for the solvent 84 to flow out after the probe 212 is removed from the first membrane member 81. The second membrane member 82 preferably has such moderate elasticity that no excess pressure is applied to a surface of the sample S when the solvent supply unit 8 is arranged on the sample S while the second membrane member 82 functions as a contact face.

A material each constituting the first membrane member 81 and the second membrane member 82 is preferably polyvinylidene chloride, but the material is not limited to this, and other resins containing at least one selected from polyethylene, polyvinyl chloride, polymethyl pentene and the like can also be used.

Fig. 2(C) is a conceptual view illustrating arrangement of the sample S and the solvent supply unit 8 in the present embodiment. The user laparotomizes an anesthetized mouse M, and fixes it on the sample platform 211 with a fixture, not shown. Here, the sample S as the liver of the laparotomized mouse M is exposed, and the solvent supply unit 8 is arranged on the sample S while the sample S is in contact with the second membrane member 82. The solvent supply unit 8 is arranged on the sample S while holding the solvent 84 inside of the lateral wall 80. The probe 212 reciprocates by the probe drive unit 12 in such a manner that a tip thereof enters from the above into the inside of the lateral wall 80 of the solvent supply unit 8 to contact the solvent 84 or the sample S arranged below the solvent 84, and thereafter returns.

In the analysis method according to the embodiment of the present invention, first mass analysis is performed in which not the sample S but the solvent 84 is caused to adhere to the probe 212 and then ionization and mass analysis are performed to the solvent 84. Subsequent to the first mass analysis, second mass analysis is performed in which the sample S and the solvent 84 are caused to adhere to the probe 212 and then ionization and mass analysis are performed to the sample S and the solvent 84. Here, the language "second mass analysis is performed subsequent to first mass analysis" means that the user need not operate arrangement in the ionizing unit 21 from when the first mass analysis starts until when the second mass analysis ends.

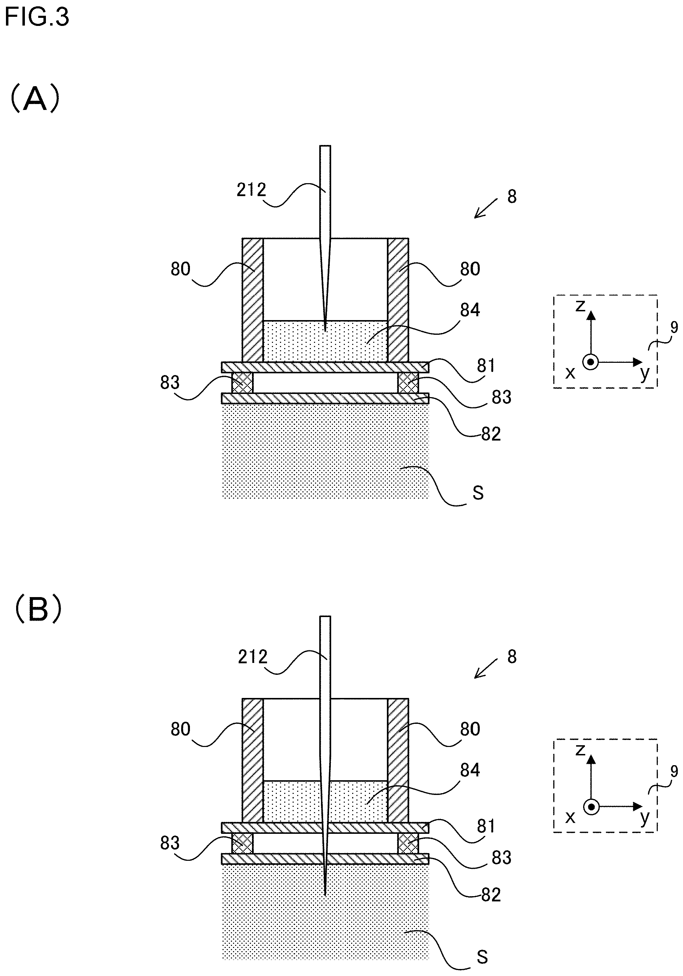

Fig. 3(A) is a conceptual view for explanation of movement of the probe 212 in the first mass analysis. The probe 212 moves downward in the drawing along a z-axis direction toward the sample S to come into contact with the solvent 84, and thereafter, returns before contacting the first membrane member 81 and moves upward in the drawing along the z-axis direction. A position where the probe 212 returns may be controlled through detection of a liquid level of the solvent 84 with a laser or the like. Otherwise, the probe 212 may return at a plurality of different positions to perform ionization until a peak associated with the solvent 84 is detected in a mass spectrum even if a position of the liquid level is not detected accurately. The probe 212 to which the solvent 84 adheres returns to a position facing the pipe 220, and then, the voltage applying unit 13 applies a high voltage to ionize the solvent 84. In the first mass analysis, ions In generated by the ionization do not contain sample-derived ions derived from the sample S but contain solvent-derived ions derived from the solvent 84.

The high voltage may be applied to the probe 212 only when the probe 212 is positioned so as to face the pipe 220, or the high voltage may be applied while the probe 212 moves. The same is applicable to the second mass analysis.

Fig. 3(B) is a conceptual view for explanation of movement of the probe 212 in the second mass analysis. The ionization of the solvent 84 adhering to the probe 212 is performed in the first mass analysis, and thereafter, the probe 212 starts moving for ionization in the second mass analysis. There is no need to clean the probe 212 between the first mass analysis and the second mass analysis, but cleaning may be made.

The probe 212 moves downward in the drawing along the z-axis direction toward the sample S to come into contact with the solvent 84, and thereafter, pierces and passes through the first membrane member 81 and the second membrane member 82 to contact the sample S. After contacting the sample S, the probe 212 returns to move upward in the drawing along the z-axis direction, and the sample S adhering to the probe 212 contacts the solvent 84. A position where the probe 212 returns may be set appropriately in accordance with a position of the detected liquid level of the solvent 84, for example. The probe 212 to which the sample S and the solvent 84 adhere returns to a position facing the pipe 220, and then, the voltage applying unit 13 applies a high voltage to ionize the sample S and the solvent 84. In the second mass analysis, ions In generated by the ionization contain sample-derived ions derived from the sample S and solvent-derived ions derived from the solvent 84.

As described above, the configuration of contacting the solvent 84 to the probe 212 with use of the solvent supply unit 8 takes the following advantages. Firstly, efficient ionization of the sample S is performable in presence of the solvent 84 since the probe 212 contacts the solvent 84 after adhesion of the sample S. Secondly, since the solvent supply unit 8 has the clearance 85, a liquid containing impurities such as blood is hardly mixed with the solvent 84, and impurities adhering to the probe 212 along with the sample S diffuse in the solvent 84 while the probe 212 passes through the solvent 84. Accordingly, noises associated with the impurities can be prevented from being mixed in the mass analysis. Thirdly, the solvent supply unit 8 serves as a weight, leading to reduction in movement of the sample S due to movement of a living organism, so that the probe 212 can be inserted into a more accurate position.

A mass analysis method after ionization of the substances adhering to the probe 212 need not particularly use a different approach between the first mass analysis and the second mass analysis, and thus, the method is described hereinafter as an aspect applicable to both the first mass analysis and the second mass analysis. Now reference is made back to Fig. 1. Ions In generated by ionization in the ionizing unit 21 are moved due to a pressure difference between the ionizing unit 21 and the first vacuum chamber 22a and the like, and enter the first vacuum chamber 22a through the pipe 220.

The first vacuum chamber 22a, the second vacuum chamber 22b, and third vacuum chamber 22c increase in degree of vacuum in this order. A vacuum pump, not shown, such as a turbomolecular pump, is used to exhaust the third vacuum chamber 22c to a high vacuum of 10⁻² Pa or less, for example. Ions In having entered the first vacuum chamber 22a pass through the ion lens 221 to be guided into the second vacuum chamber 22b. Ions In having entered the second vacuum chamber 22b pass through the ion guide 222 to be guided into the third vacuum chamber 22c. Ions In having entered the third vacuum chamber 22c are emitted into the first mass separator 23. The ion lens 221, the ion guide 222 and the like converge flow of ions In passing therethrough by electromagnetic action before the ions enter the first mass separator 23.

The first mass separator 23 includes a quadrupole mass filter, and causes ions In of a set m/z value to pass selectively and emits the ions In toward the collision cell 24 as precursor ions by an electromagnetic action based on a voltage applied to the quadrupole mass filter. The first mass separator 23 causes the sample-derived ions to pass selectively.

The collision cell 24 dissociates the precursor ions by collision-induced dissociation (CID) while the ion guide 240 controls movement of the ions, thereby generating product ions. The sample-derived ions are also dissociated to generate fragment ions, which are assumed to be also included in the sample-derived ions. Gas containing argon, nitrogen or the like with which the ions collide during CID (hereinafter, called CID gas) is guided from a CID gas inlet 241 (arrow A5) such that a predetermined pressure is obtained within the collision cell. The ions In containing the generated product ions are emitted toward the second mass separator 25.

The second mass separator 25 includes a quadrupole mass filter, and causes ions In of a set m/z value to pass selectively and emits the ions In toward the detector 30 by an electromagnetic action based on a voltage applied to the quadrupole mass filter. The second mass separator 23 causes the sample-derived ions to pass selectively from the product ions.

A mass separation method in the first mass separator 23 and the second mass separator 25 is not particularly limited, but is appropriately set based on components and the like of the sample S to be analyzed. For example, the first mass separator 23 can cause ions In of a specific m/z value to pass selectively, and the collision cell 24 can dissociate the ions In, and thereafter, the second mass separator 25 can cause ions In in a predetermined range of the m/z value to pass sequentially through scanning at a voltage applied to the quadrupole mass filter. In this case, a mass spectrum is obtainable that contains product ions of the ions In that the first mass separator 23 passes. In the analysis method according to the present embodiment, besides the product ion scan measurement as described above, a precursor ion scan measurement, a neutral loss scan measurement or a multiple reaction monitoring (MRM) measurement are also performable. Moreover, a selective ion monitoring (SIM) measurement and the like may be performed without dissociation by the collision cell 24.

The detector 30 includes an ion detector such as a secondary electron multiplier tube and a photomultiplier tube, and detects incident ions In. A detection mode may be either a positive ion mode where positive ions are detected or a negative ion mode where negative ions are detected. The detection signal obtained by detecting the ions In containing the sample-derived ions is converted into a digital signal by an A/D converter, not shown, and is inputted to the control unit 50 of the information processing unit 40 (arrow A6).

The information processing unit 40 includes an information processing device such as an electronic computer, and interfaces with a user as needed. In addition, the information processing unit 40 performs processing such as communication, storage, and calculation for various types of data. The information processing unit 40 functions as a device for performing control, analysis, and display of the measurement unit 100.

It should be noted that the information processing unit 40 may be configured as one device integrated with the mass spectrometer 10. Moreover, part of the data used in the analysis method according to the present embodiment may be stored in a remote server and the like, or part of the arithmetic processing in the analysis method may be performed in a remote server and the like. Operation of each section of the measurement unit 100 may be controlled by the information processing unit 40 or by a device constituting each section.

The input unit 41 of the information processing unit 40 includes an input device such as a mouse, a keyboard, various buttons or a touch panel. The input unit 41 receives, from a user, information, such as parameters for controlling the ionizing unit 21, that is necessary for the processing performed by the measurement unit 100 or the processing performed by the control unit 50.

The communication unit 42 of the information processing unit 40 includes a communication device that is communicable via a network such as the Internet through wireless or wired connection. For example, the communication unit 42 receives data necessary for measurement by the measurement unit 100, transmits data, such as analysis results of the analyzer 52, processed by the control unit 50, and transmits and receives data as needed.

The memory unit 43 of the information processing unit 40 includes a nonvolatile storage medium. The memory unit 43 stores measurement data based on the detection signal outputted from the measurement unit 100, programs for executing processings by the control unit 50, and the like.

The output unit 44 of the information processing unit 40 is controlled by the output controller 53, and includes a display device such as a liquid crystal monitor and/or a printer to display information about the measurement by the measurement unit 100 and the analysis result by the analyzer 52 and the like on a display device or to print the information or the analysis result to a print medium for output.

The control unit 50 of the information processing unit 40 includes a processor such as a CPU and the like. The control unit 50 performs various processings, such as control of the measurement unit 100 including the ionizing unit 21 and analysis of the measurement data, by executing the programs stored in the memory unit 43 or the like.

The device controller 51 of the control unit 50 controls measurement operation of the measurement unit 100 based on analysis condition data set in accordance with input from the input unit 41 and the like. The device controller 51 obtains analysis condition data about the first mass analysis and analysis condition data about the second mass analysis. The device controller 51 sets a series of operations of the measurement unit 100 from when the first mass analysis starts until when the second mass analysis ends in accordance with the data.

It is assumed, for example, that ionization and detection of the generated ions In are performed a plurality of times in both the first mass analysis and the second mass analysis to obtain detection intensities, and the detection intensities are integrated to generate measurement data. In this case, the device controller 51 sets parameters about ionization control, such as the number of times of vertical movement of the probe 212, based on the number of times of ionization in each of the first mass analysis and the second mass analysis, and sets parameters about mass analysis control, such as voltages applied to the first mass separator 23 and the second mass separator 25. The device controller 51 controls each section of the measurement unit 100 so as to repeat ionization, mass separation, and detection based on these parameters. When positions of the sample S and the solvent 84 can be set in advance, coordinate values indicating the positions may be inputted from the input unit 41, and the device controller 51 may control the movement of the probe 212 based on these coordinate values.

The analyzer 52 performs analysis such as quantitative determination of each component of the sample S in accordance with the measurement data obtained in the first mass analysis (hereinafter, called first measurement data) and measurement data obtained in the second mass analysis (hereinafter, called second measurement data). The analyzer 52 generates measurement data associated with the sample S (hereinafter, called sample measurement data) based on the first measurement data and the second measurement data.

The analyzer 52 calculates an intensity, corresponding to each m/z value, from the detection signal outputted from detector 30 in the first mass analysis and the second mass analysis, respectively. The analyzer 52 calculates a value obtained by subtracting the intensity corresponding to the first mass analysis from the intensity corresponding to the second mass analysis for each of the m/z value, and stores data, in which the value is corresponding to the m/z value, as sample measurement data in the memory unit 43.

When the ions In having a predetermined range of the m/z value are detected by scanning at a voltage applied to the quadrupole mass filter as in the product ion scan measurement, the analyzer 52 can generate data corresponding to a mass spectrum in which an m/z value is in correspondence with an intensity. In this case, the analyzer 52 can generate data corresponding to the mass spectrum associated with the sample S by subtracting the intensity, corresponding to each of the m/z value of the mass spectrum obtained in the first mass analysis, from the intensity, corresponding to each of the m/z value of the mass spectrum obtained in the second mass analysis.

The analyzer 52 can identify molecules corresponding to each peak of the mass spectrum, based on the data and the like previously obtained in the mass analysis. Moreover, the analyzer 52 can quantify the molecules contained in the sample S by, for example, normalizing the intensity associated with each molecule using the intensity of the m/z value associated with the reference molecule. Here, the analysis method by the analyzer 52 is not particularly limited.

The output controller 53 generates an output image that contains the analysis condition data, or various numerical values or the mass spectrum obtained through the analysis by the analyzer 52, and outputs the image to the output unit 44.

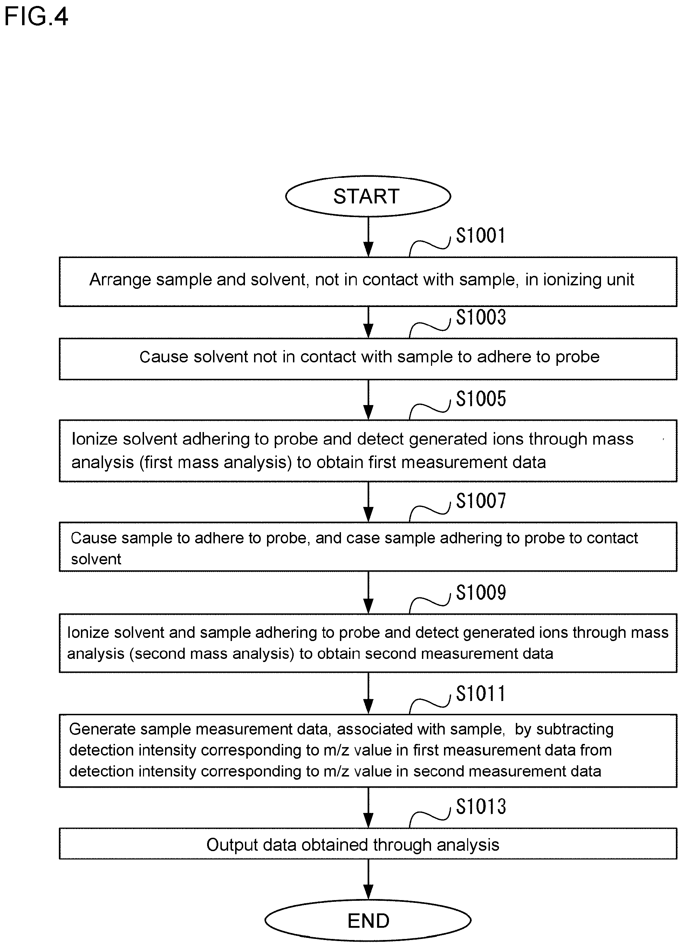

Fig. 4 is a flow chart of the analysis method according to the present embodiment. In a step S1001, a user or the like arranges a sample S and a solvent 84 not in contact with the sample S in an ionizing unit 21. If the step S1001 ends, a step S1003 starts. In the step S1003, a device controller 51 causes the solvent 84 not in contact with the sample S to adhere to a probe 212. If the step S1003 ends, a step S1005 starts.

In the step S1005, a mass spectrometer 10 ionizes the solvent 84 adhering to the probe 212 and detects generated ions In through mass analysis (first mass analysis) to obtain first measurement data. If the step S1005 ends, a step S1007 starts. In the step S1007, the device controller 51 causes the sample S to adhere to the probe 212, and causes the sample S adhering to the probe 212 to contact the solvent 84. If the step S1007 ends, a step S1009 starts.

In the step S1009, the mass spectrometer 10 ionizes the solvent 84 and the sample S adhering to the probe 212 and detects generated ions In through mass analysis (second mass analysis) to obtain second measurement data. If the step S1009 ends, a step S1011 starts. In the step S1011, the mass spectrometer 10 generates sample measurement data by subtracting a detection intensity corresponding to an m/z value in the first measurement data from a detection intensity corresponding to an m/z value in the second measurement data. If the step S1011 ends, a step S1013 starts.

In the step S1013, an output unit 44 outputs data obtained through analysis. If the step S1013 ends, the process is completed.

According to the embodiment described above, the following functions and effects can be achieved.
(1) The analysis method according to the present embodiment is an analysis method for ionizing the sample S arranged in the ionizing unit 21 of the analysis device 1 in a state where the sample S is in contact with the solvent 84 to perform analyzation. The method includes: the first mass analysis step of obtaining the first measurement data by causing the solvent 84 not in contact with the sample S to adhere to the probe 212, and then ionizing the solvent 84 adhering to the probe 212 to detect generated ions through mass analysis; the second mass analysis step, performed subsequently to the first mass analysis step, of obtaining the second measurement data by causing the sample S adhering to the probe 212 to be brought into contact with the solvent 84, and then ionizing the solvent 84 and the sample S adhering to the probe 212 to detect generated ions In through mass analysis; and the measurement data generation step of generating sample measurement data based on the first measurement data and the second measurement data. This can perform rapid analysis of the sample S without time and effort of the user while taking advantage of the PESI.
(2) In the analysis method according to the present embodiment, the sample S and the solvent 84 are arranged within the ionization chamber 214 of the ionizing unit 21. This can perform more stable analysis of the sample S with less influences externally of the analysis device 1.
(3) In the analysis method according to the present embodiment, a user does not or need not operate arrangement of the sample S or the solvent 84 from when the first mass analysis starts until when the second mass analysis ends. This can perform rapid analysis of the sample S without time and effort of the user for operating the sample S and the solvent 84 while taking advantage of the PESI.
(4) In the analysis method according to the present embodiment, the sample measurement data is generated by subtracting a detection intensity corresponding to an m/z value in the first measurement data from a detection intensity corresponding to an m/z value in the second measurement data. This can remove noises by the solvent 84, thereby obtaining more analyzable measurement data.
(5) The analysis device according to the present embodiment is an analysis device used in the analysis method according to the present embodiment. The analysis device includes the measurement unit 100 configured to perform the first mass analysis step and the second mass analysis step performed subsequently to the first mass analysis step, and the analyzer 52 configured to generate the sample measurement data based on the first measurement data and the second measurement data. This can perform rapid analysis of the sample S without time and effort of the user while taking advantage of the PESI.

The following modifications are also within the scope of the present invention, and may be combined with the embodiment described above. In the following modifications, the same reference numerals are used to refer to the parts having the same configuration and function as those in the embodiment described above, and thus the description thereof will be omitted as appropriate.

### (Modification 1)

The mass spectrometer 10 of the analysis device 1 according to the above embodiment is a tandem mass spectrometer, but may be a mass spectrometer including only one mass separator. Moreover, the mass spectrometer 10 is a triple quadrupole mass spectrometer, but may include other types of mass separators such as ion traps and time-of-flight mass separators. The number of vacuum chambers and the structure of the ion transport system such as the ion lens 221 and the ion guide 222 are not particularly limited. The type of the mass spectrometer 10 and the structure of each part are not particularly limited as long as the sample-derived ions can be detected through mass separation at a desired accuracy.

Likewise, an analysis method in the mass spectrometer 10 is not particularly limited as long as the sample-derived ions can be detected through mass separation at a desired accuracy. Infrared multiphoton dissociation, photoinduced dissociation, dissociation using radicals, and the like can be suitably used.

### (Modification 2)

In the embodiment described above, in order to move the probe 212 relatively with respect to the sample S, the movement of the probe 212 in the direction of piercing the sample S (z-axis direction) is driven by the probe drive unit 12, and the movement in the direction along the top face of the sample platform 211 (direction parallel to the xy-plane) is driven by the sample platform drive unit 11. However, either the probe 212 or the sample platform 211 may move along in any direction as long as the probe 212 can be brought into contact with the sample S and the solvent 84. For example, at least either the probe 212 or the sample platform 211 may be movable in the x-axis, y-axis and z-axis directions.

### (Modification 3)

In the embodiment described above, in order to ionize the solvent 84 to perform the first mass analysis, the solvent 84 arranged within a solvent container located at a place different from the sample S may adhere to the probe 212 for performing ionization. The solvent container may be, for example, a container such as a beaker and a vial that is capable of accommodating a liquid. Moreover, a material, shape and the like of the solvent container are not particularly limited as long as the probe 212 can be brought into contact with the solvent 84 arranged in the solvent container.

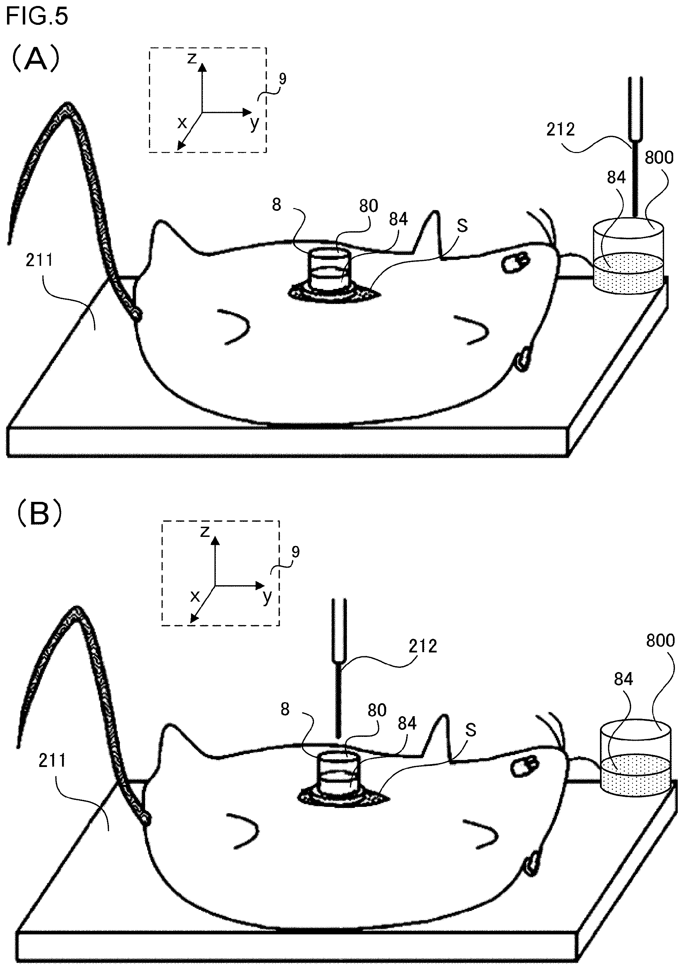

Fig. 5(A) is a conceptual view for explanation of movement of the probe 212 in first mass analysis in the present modification. The sample platform drive unit 11 causes the sample platform 211 to move, and the probe 212 is moved to the above of a solvent container 800 located at a position different from the sample S on the sample platform 211. Thereafter, the probe drive unit 12 causes the probe 212 to move downward in the drawing along the z-axis direction toward the solvent 84 to come into contact with the solvent 84, and thereafter, returns before contacting a bottom face of the solvent container 800, and moves upward in the drawing along the z-axis direction. The device controller 51 may control a position where the probe 212 returns in accordance with a position of the solvent container 800 based on the input and the like from the input unit 41, a liquid level or a bottom level of the solvent 84 based on the position, and the like. The probe 212 to which the solvent 84 adheres returns to a position facing the pipe 220, and then, the voltage applying unit 13 applies a high voltage to ionize the solvent 84.

Fig. 5(B) is a conceptual view for explanation of movement of the probe 212 in second mass analysis in the present modification. After the first mass analysis, the sample platform drive unit 11 causes the sample platform 211 to move appropriately, and the probe 212 is located above the solvent supply unit 8. The probe 212 is moved by the probe drive unit 12 downward in the drawing along the z-axis direction toward the sample S to come into contact with the solvent 84, and thereafter, pierces and passes through the first membrane member 81 and the second membrane member 82 to contact the sample S. After contacting the sample S, the probe 212 returns to move upward in the drawing along the z-axis direction, and the sample S adhering to the probe 212 contacts the solvent 84. The probe 212 to which the sample S and the solvent 84 adhere returns back to a position facing the pipe 220, and then, the voltage applying unit 13 applies a high voltage to ionize the sample S and the solvent 84.

Since the solvent container 800 can be located at a desired stable position in the analysis method according to the present modification, such operation of causing the solvent 84 to adhere to the probe 212 in the first mass analysis is performable more easily.

Moreover, when the sample S is a liquid sample, the sample S and the solvent 84 can be arranged in different wells of a sample plate having a plurality of wells, or the sample S and the solvent 84 can be arranged in a plurality of containers, respectively, to perform the first mass analysis and the second mass analysis.

### (Modification 4)

In the embodiment described above, the first mass analysis is performed and thereafter the second mass analysis is performed, but the first mass analysis and the second mass analysis may be performed alternately. The analyzer 52 can generate first measurement data associated with the first mass analysis by integrating an intensity corresponding to each of the m/z values obtained by a plurality of times of the first mass analysis or calculating the average value of the intensity by the arithmetical mean and the like. Likewise, the analyzer 52 can generate second measurement data associated with the second mass analysis by integrating an intensity corresponding to each of the m/z values obtained by a plurality of times of the second mass analysis or calculating the average value of the intensity by the arithmetical mean and the like. When the first mass analysis is performed after the second mass analysis, it is preferable to replace or clean the probe 212, but this is not particularly limited.

### Second Embodiment

An analysis device 1 for an analysis method according to a second embodiment has substantially the same structure as that of the analysis device 1 according to the first embodiment. In the second embodiment, the same reference numerals are used to refer to the parts having the same configuration and function as the first embodiment described above, and thus the description thereof will be omitted as appropriate. In the analysis method according to the present embodiment, a solvent supply unit 8 is not particularly needed. A sample plate is arranged on a sample platform 211, and first mass analysis and second mass analysis are performed to a sample S and a solvent 84 arranged on the sample plate.

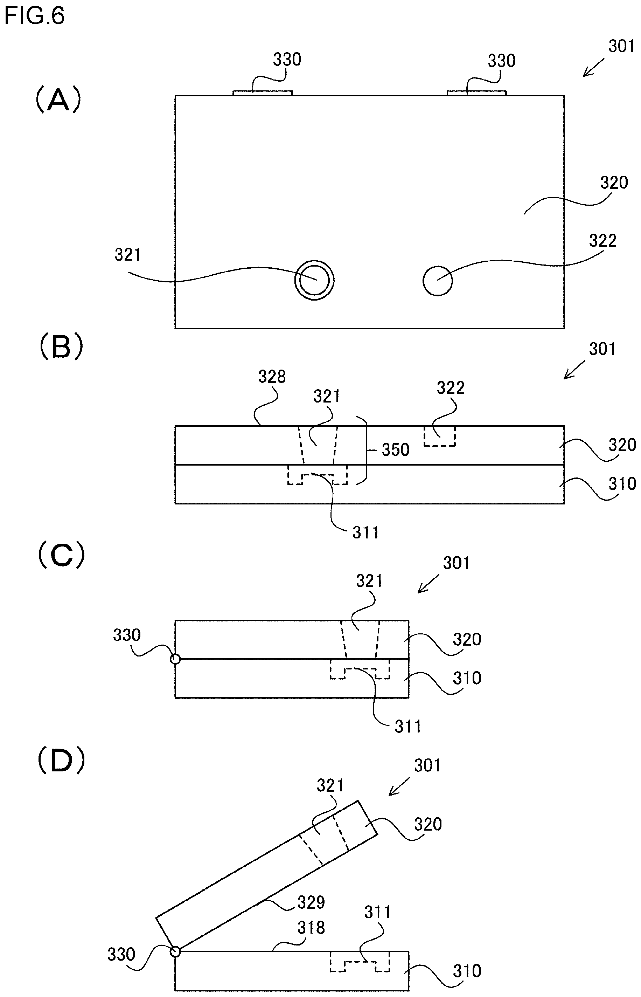

Figs. 6(A), 6(B), and 6(C) are schematic top view, front view, and side view, respectively, of a sample plate 301 according to the present embodiment in a closed state. Fig. 6(D) is a side view of the sample plate 301 in an open state. The sample plate 301 includes a main body 310, a lid 320, and a hinge 330. The main body 310 has a recess 311. The lid 320 has an opening 321 and a solvent storage portion 322. The material constituting the sample plate 301 is not particularly limited, but may contain a resin such as polypropylene as a main component, for example.

The main body 310 and the lid 320 are configured in a flat plate shape, and a top face 318 (Fig. 6(D)) of the main body is in contact with a bottom face 329 of the lid while the sample plate 301 is in a closed state, as shown in Figs. 6(B) and 6(C). The lid 320 is coupled to the main body 310 via the hinge 330 such that the lid 320 is pivotable relative to the main body 310 around the hinge 330 (see Fig. 6(D)).

The recess 311 of the main body 310 is configured to be coupled to the opening 321 of the lid 320 while the sample plate 301 is in a closed state. The recess 311 and the opening 321 integrally form a sample arrangement portion 350. A region where the main body 310 and the lid 320 are in direct contact with each other is configured so as to be in close contact with each other such that a liquid guided into the sample arrangement portion 350 does not leak. The sample plate 301 preferably includes a latch mechanism and the like, not shown, that is configured to fix the sample plate 301 in a closed state.

The solvent storage portion 322 of the lid 320 is a well formed in the top face 328 of the lid 320.

It should be noted that the solvent storage portion 322 may be formed, for example, as an opening passing through the lid 320, and the shape thereof is not particularly limited as long as the solvent storage portion 322 can store the solvent 84 such that the probe 212 can be brought into contact with the solvent 84.

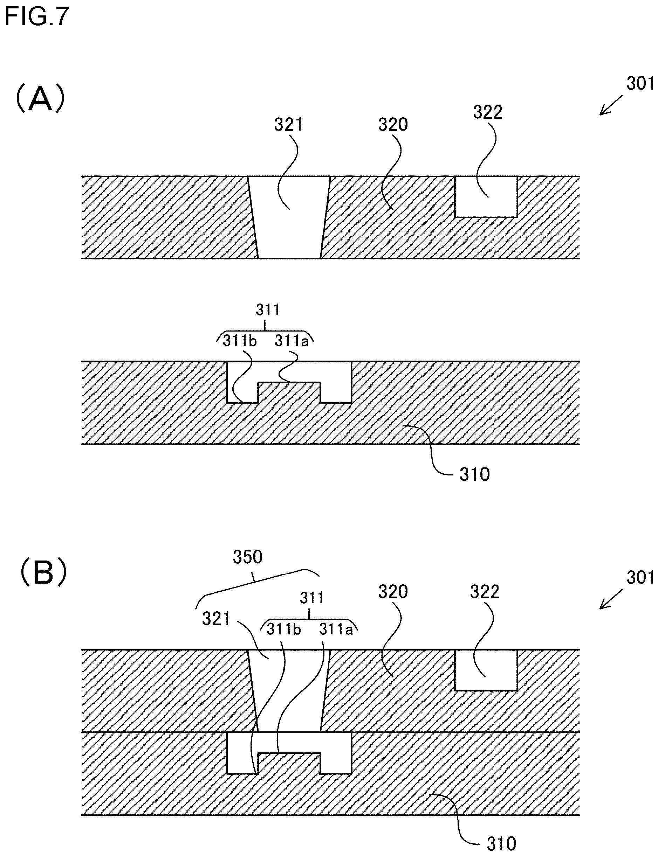

FIG. 7(A) is a cross-sectional view of the opening 321, the sample storage portion 322, and a recess 311 while the sample plate 301 is in an open state, and Fig. 7(B) is a cross-sectional view of the sample arrangement portion 350 and the solvent storage portion 322 while the sample plate 301 is in a closed state. A groove 311 has a projection 311a and a groove 311b, and the groove 311b is formed around the projection 311a. A top face of the projection 311 faces the opening 321 while the sample plate 301 is in a closed state.

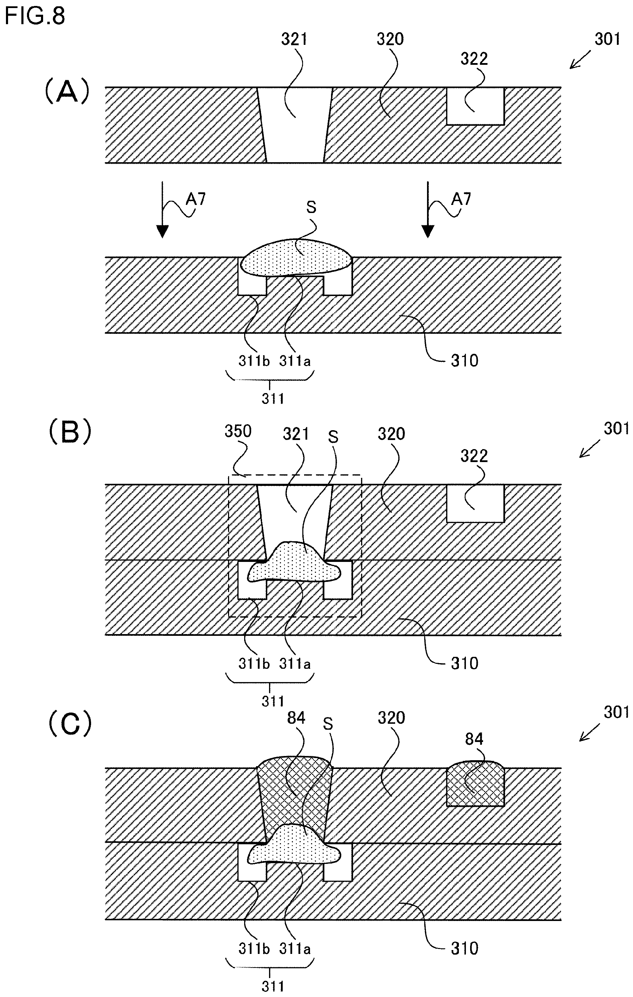

Figs. 8(A), 8(B), and 8(C) are each a conceptual view for explanation of arranging the sample S on the sample plate 301. Hereinafter, the sample S is described as a solid sample, such as a visceral organ, extracted from an organism, but the type of the sample S is not particularly limited as long as it can be arranged in the sample arrangement portion 350.

In Fig. 8(A), the sample S is arranged on the projection 311a of the recess 311 while the sample plate 301 is in an open state, and then the sample plate 301 is closed (arrow A7). When the sample plate 301 is closed, the sample S is fixed in a space between the lid 320 and the projection 311a while contacting thereto, which is as shown in Fig. 8(B). At this time, the projection 311a faces the opening 321. Accordingly, the sample S enters the opening 321 to be held such that the probe 212 can pierce the sample S. When the sample S is held in the sample arrangement portion 350, the solvent 84 is arranged in the opening 321 and the solvent storage portion 322 (Fig. 8(C)). Thereby, on the sample plate 301, the sample S contacting the solvent 84 is arranged in the sample arrangement portion 350, and the solvent 84 not contacting the sample S is arranged in the solvent storage portion 322. Under such a condition, the sample plate 301 is fixed on the sample platform 211 (Fig. 1).

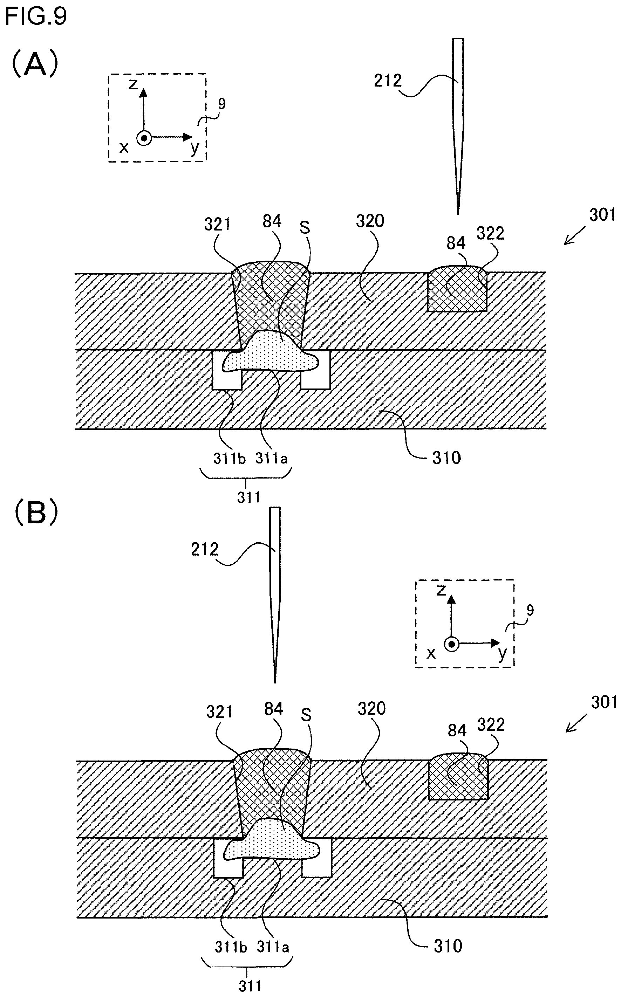

Fig. 9(A) is a conceptual view for explanation of movement of the probe 212 in the first mass analysis in the present embodiment. The sample platform 211 is moved by the sample platform drive unit 11 (Fig. 1), and the probe 212 is moved to be above of the solvent storage portion 322 where the solvent 84 is arranged. Thereafter, the probe 212 is moved by the probe drive unit 12 downward in the drawing along the z-axis direction to come into contact with the solvent 84, and then, returns before contacting a bottom face of the solvent storage portion 322 and moves upward in the drawing along the z-axis direction. The probe 212 to which the solvent 84 adheres returns to a position facing the pipe 220, and then, the voltage applying unit 13 applies a high voltage to ionize the solvent 84.

Fig. 9(B) is a conceptual view for explanation of movement of the probe 212 for the second mass analysis in the present embodiment. After the first mass analysis, the sample platform drive unit 11 (Fig. 1) moves the sample platform 211, and the probe 212 is located above the opening 321. The probe 212 is moved by the probe drive unit 12 downward in the drawing along the z-axis direction to come into contact with the sample S through the solvent 84. After contacting the sample S, the probe 212 returns to move upward in the drawing along the z-axis direction, and the sample S adhering to the probe 212 contacts the solvent 84. The probe 212 to which the sample S and solvent 84 adhere returns to a position facing the pipe 220, and then, the voltage applying unit 13 applies a high voltage to ionize the sample S and the solvent 84.

With use of the sample plate 301 according to the present embodiment, the probe 212 can pierce the sample S while securely holding the solid sample, such as a slice of a biological tissue, and the probe 212 can be inserted into a more accurate position in the solid sample. Moreover, since the solvent 84 can reliably adhere to the sample S in the process of reciprocation when the probe 212 pierces the sample S, efficient ionization can be performed.

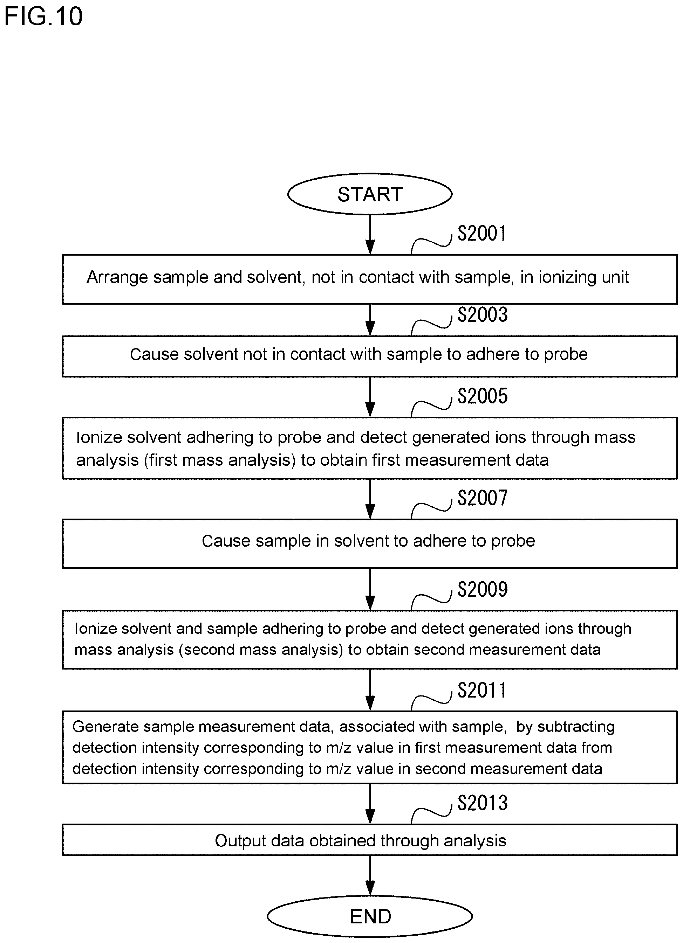

Fig. 10 is a flow chart of the analysis method according to the present embodiment. Steps S2001 to S2005 are the same as steps S1001 to S1005 of the flowchart (Fig. 4) showing the flow of the analysis method of the first embodiment, and therefore, the description thereof is omitted. If the step S2005 ends, a step S2007 starts. In the step S2007, a device controller 51 causes a sample S in a solvent 84 to adhere to a probe 212. If the step S2007 ends, a step S2009 starts. Steps S2009 to S2013 are the same as steps S1009 to S1013 of the flowchart in Fig. 4, respectively, and therefore, the description thereof is omitted.

According to the second embodiment described above, the following functions and effects can be achieved besides the functions and effects obtained from the first embodiment.
(1) In the analysis method and the analysis device according to the present embodiment, the device controller 51 causes the sample S in the solvent 84 to adhere to the probe 212 in the second mass analysis. Thereby, the analysis can be performed while the sample S contacts the solvent 84, leading to prevention of drying of the sample S or to action of the reagent, added to the solvent 84, to the sample S.
(2) In the analysis method according to the present embodiment, a user does not or need not replace the sample plate 301 where either the sample S or the solvent 84 is arranged from when the first mass analysis step starts until when the second mass analysis step ends. This can perform rapid analysis of the sample S without any time and effort of replacing the sample plate 301 while taking advantage of the PESI. In addition, the sample plate 301 can be saved.

The following modifications are also within the scope of the present invention, and may be combined with the embodiment described above. In the following modifications, the same reference numerals are used to refer to the parts having the same configuration and function as those in the embodiment described above, and thus the description thereof will be omitted as appropriate.

### (Modification 1)

In the embodiment described above, the shape of the sample plate 301 is not particularly limited as long as the sample plate 301 includes the sample arrangement portion 350 where the sample S is arranged so as to contact the solvent 84, and the solvent storage portion 322 where the solvent 84 is arranged. For example, the sample plate 322 may not be composed of two parts, i.e., the main body 310 and the lid 320.

### (Modification 2)

Programs for realizing information processing function of the analysis device 1 may be recorded on a computer-readable recording medium, and the programs recorded on the recording medium and concerning the device control and the analysis processing described above and control of the processing related thereto may be read and executed by a computer system. Here, the term "computer system" includes an operation system (OS) and peripheral hardware. Moreover, the term "computer readable recording medium" refers to a portable recording medium such as a flexible disk, magneto-optical disk, optical disk, and memory card, or a storage device, such as a hard disk, that is built in the computer system. Moreover, the term "computer readable recording medium" may include one, like a communication line for transmitting a program via a communication line such as a network like the Internet or a telephone line, that dynamically holds the program for a short period of time, and one, like a volatile memory inside the computer system that functions as a server or a client in this case, that holds the program for a fixed period of time. Moreover, the above program may be for realizing part of the above functions, or may be realized by combining the above functions with the programs already recorded in the computer system.

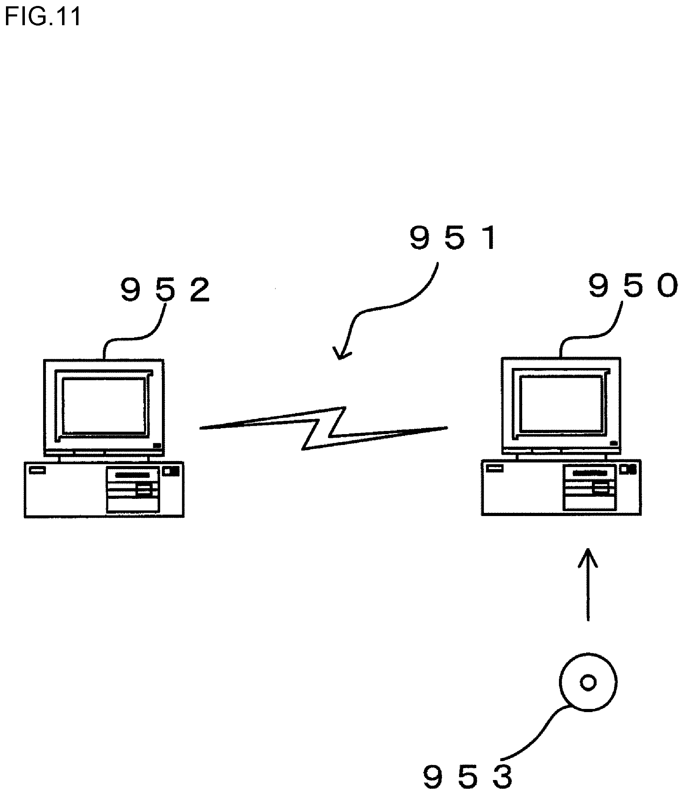

Moreover, when the present invention is applied to a personal computer (hereinafter, called PC) or the like, the control program described above can be provided through a recording medium such as a CD-ROM or a data signal via the Internet and the like. Fig. 11 illustrates this. A PC 950 receives a program through a CD-ROM 953. The PC 950 also functions as connection to a communication line 951. A computer 952 is a server computer for providing the program, and stores the program in a recording medium such as a hard disk. The communication line 951 is, for example, a communication line such as the Internet and a personal computer communication, or a leased communication line. The computer 952 reads a program with use of a hard disk, and transmits the program through the communication line 951 to the PC 950. That is, the program is carried as a data signal via a carrier wave and transmitted through the communication line 951. As described above, a program may be provided as a computer readable computer program product in various forms like a recording medium or carrier wave.

The program for realizing the information processing function as described above includes a program for causing a processing device to execute the following in the ionizing unit 21 of the analysis device where the sample S and the solvent 84 are arranged: a first mass analysis control processing of obtaining the first measurement data by causing the solvent 84 not in contact with the sample S to adhere to the probe 212 (corresponding to the step S1003 in Fig. 4), and then ionizing the solvent 84 adhering to the probe 212 to detect generated ions In through mass analysis (corresponding to the step S1005); the second mass analysis control processing of obtaining the second measurement data, performed subsequently to the first mass analysis control processing, by causing the sample S in the solvent 84 to adhere to the probe 212 (corresponding to the step S2007 in Fig. 10) or causing the sample S adhering to the probe 212 to be brought into contact with the solvent 84 (corresponding to the step S1007 in Fig. 4), and then ionizing the solvent 84 and the sample S adhering to the probe 212 to detect generated ions In through mass analysis (corresponding to the step S1009); and the measurement data generation processing of generating the sample measurement data based on the first measurement data and the second measurement data (corresponding to the step S1011). This can perform rapid analysis of the sample S without time and effort while taking advantage of the

### PESI.

The present invention is not limited to the contexts of the embodiments described above, and its scope is defined by the appended claims.

### Reference Signs List

- 1:: Analysis device
- 8:: Solvent supply unit
- 10:: Mass spectrometer
- 21:: Ionizing unit
- 23:: First mass separator
- 24:: Collision cell
- 25:: Second mass separator
- 30:: Detector
- 40:: Information processing unit
- 44:: Output unit
- 50:: Control unit
- 51:: Device controller
- 52:: Analyzer
- 53:: Output controller
- 80:: Lateral wall
- 81:: First membrane member
- 82:: Second membrane member
- 83:: Spacer
- 84:: Solvent
- 85:: Clearance
- 100:: Measurement unit
- 211:: Sample platform
- 212:: Probe
- 213:: Probe holder
- 214:: Ionization chamber
- 301:: Sample plate
- 310:: Main body
- 311:: Recess
- 311a:: Projection
- 311b:: Groove
- 320:: Lid
- 321:: Opening
- 322:: Solvent storage portion
- 350:: Sample arrangement portion
- 800:: Solvent container
- In:: Ion
- S:: Sample

## Claims

1. An analysis method for ionizing a sample (S) arranged in an ionizing unit (21) of an analysis device (1) in a state where the sample (S) is in contact with a solvent (84) to perform analyzation, the method comprising:
an arrangement step of arranging the solvent (84) and the sample (S) at different positions in the ionizing unit (21),
a first mass analysis step, performed after the arrangement step, of obtaining first measurement data by causing the solvent (84) not in contact with the sample (S) to adhere to a probe (212), and then ionizing the solvent (84) adhering to the probe (212) to detect generated ions through mass analysis;
a second mass analysis step, performed subsequently to the first mass analysis step, of obtaining second measurement data by causing the sample (S) to adhere to the probe (212) and causing the sample (S) adhering to the probe (212) to be brought into contact with the solvent (84), and then ionizing the solvent (84) and the sample (S) adhering to the probe (212) to detect generated ions through mass analysis; and
a measurement data generation step of generating measurement data, associated with the sample (S), based on the first measurement data and the second measurement data; and wherein
the solvent (84) and the sample (S) arranged in the arrangement step remain within the ionizing unit (21) from when the first mass analysis step starts until when the second mass analysis step ends.

2. The analysis method according to claim 1, wherein the analysis device (1) is provided with a drive unit (11,12) configured to move a probe (212) or a sample (S) in a z-direction, wherein the z-direction is that parallel to the longitudinal axis direction of the probe (212), and cause (i) the sample (S) and the solvent (84) or (ii) the solvent (84) to adhere to the probe (212), and a high voltage application unit configured to apply a high voltage to the probe (212) to which (i) the sample (S) and the solvent (84) or (ii) the solvent (84) adheres and cause components in (i) the sample (S) and the solvent (84) or (ii) the solvent (84) to be discharged to an ambient atmosphere due to an electrospray phenomenon, and wherein:
in the first mass analysis step, the drive unit (11,12) moves the probe (212) to a position where the solvent (84) not in contact with the sample (S) is caused to adhere to the probe (212); and
in the second mass analysis step, the drive unit (11,12) moves the probe (212) to a position where sample (S) adhering to the probe (212) is brought into contact with the solvent (84).

3. The analysis method according to claim 1 or 2, wherein
the sample (S) and the solvent (84) are arranged within an ionization chamber (214) of the ionizing unit (21).

4. The analysis method according to any one of claims 1 to 3, wherein
the measurement data associated with the sample (S) is generated by subtracting a detection intensity corresponding to an m/z value in the first measurement data from a detection intensity corresponding to an m/z value in the second measurement data in the measurement data generation step.

5. An analysis device (1), provided with an ionizing unit (21), for ionizing a sample (S) arranged in the ionizing unit (21) in a state where the sample (S) is in contact with a solvent (84) to perform analyzation, the analysis device (1) comprising:
a measurement unit (100) configured to perform first mass analysis for obtaining first measurement data in the ionizing unit (21) of the analysis device (1) where the solvent (84) and the sample (S) are arranged at different positions in the ionizing unit (21), by causing the solvent (84) not in contact with the sample (S) to adhere to a probe (212), and then ionizing the solvent (84) adhering to the probe (212) to detect generated ions through mass analysis, and second mass analysis, performed subsequently to the first mass analysis, for obtaining second measurement data by causing the sample (S) to adhere to the probe (212) and causing the sample (S) adhering to the probe (212) to be brought into contact with the solvent (84), and then ionizing the solvent (84) and the sample (S) adhering to the probe (212) to detect generated ions through mass analysis; and
an analyzer (52) configured to generate measurement data, associated with the sample (S), based on the first measurement data and the second measurement data; and wherein
the solvent (84) and the sample (S) arranged at different positions in the ionizing unit (21) remain within the ionizing unit (21) from when the first mass analysis starts until when the second mass analysis ends.

6. A program for causing a processing device to perform:
a first mass analysis control processing for obtaining first measurement data in an ionizing unit (21) of an analysis device (1) where a sample (S) and a solvent (84) are arranged at different positions in the ionizing unit (21), by causing the solvent (84) not in contact with the sample (S) to adhere to a probe (212), and then ionizing the solvent (84) adhering to the probe to detect generated ions through mass analysis;
a second mass analysis control processing for obtaining second measurement data, performed subsequently to the first mass analysis control processing, by causing the sample (S) to adhere to the probe (212) and causing the sample (S) adhering to the probe (212) to be brought into contact with the solvent (84), and then ionizing the solvent (84) and the sample (S) adhering to the probe (212) to detect generated ions through mass analysis; and
a measurement data generation processing for generating measurement data associated with the sample (S), based on the first measurement data and the second measurement data; and wherein
the solvent (84) and the sample (S) arranged at different positions in the ionizing unit (21) remain within the ionizing unit (21) from when the first mass analysis starts until when the second mass analysis ends.

## Patentansprüche

1. Analyseverfahren zum Ionisieren einer Probe (S), die in einer Ionisierungseinheit (21) einer Analysevorrichtung (1) angeordnet ist, in einem Zustand, in dem die Probe (S) mit einem Lösungsmittel (84) in Berührung ist, um eine Analyse durchzuführen, wobei das Verfahren Folgendes umfasst:
einen Anordnungsschritt des Anordnens des Lösungsmittels (84) und der Probe (S) an unterschiedlichen Positionen in der Ionisierungseinheit (21),
einen ersten Massenanalyseschritt, der nach dem Anordnungsschritt durchgeführt wird, des Erhaltens von ersten Messdaten durch Bewirken, dass das Lösungsmittel (84), das nicht mit der Probe (S) in Kontakt ist, an einer Probe (212) anhaftet, und dann Ionisieren des Lösungsmittels (84), das an der Sonde (212) anhaftet, um erzeugte Ionen durch Massenanalyse zu detektieren;
einen zweiten Massenanalyseschritt, der nach dem ersten Massenanalyseschritt durchgeführt wird, des Erhaltens zweiter Messdaten, durch Bewirken, dass die Probe (S) an der Sonde (212) anhaftet, und Bewirken, dass die Probe (S), die an der Sonde (212) anhaftet, mit dem Lösungsmittel (84) in Kontakt gebracht wird, und dann Ionisieren des Lösungsmittels (84) und der Probe (S), die an der Sonde (212) anhaftet, um erzeugte Ionen durch Massenanalyse zu detektieren; und
einen Messdatenerzeugungsschritt des Erzeugens von Messdaten, die der Probe (S) zugeordnet sind, basierend auf den ersten Messdaten und den zweiten Messdaten; und wobei
das Lösungsmittel (84) und die Probe (S), die in dem Anordnungsschritt angeordnet werden, ab dem Zeitpunkt, wenn der erste Massenanalyseschritt startet, bis zu dem Zeitpunkt, wenn der zweite Massenanalyseschritt endet, innerhalb der Ionisierungseinheit (21) verbleiben.

2. Analyseverfahren nach Anspruch 1, wobei die Analysevorrichtung (1) mit einer Antriebseinheit (11, 12) bereitgestellt ist, die ausgelegt ist, um eine Sonde (212) oder eine Probe (S) in eine z-Richtung zu bewegen, wobei die z-Richtung jene ist, die parallel zu der Längsachsenrichtung der Sonde (212) ist, und um zu bewirken, dass (i) die Probe (S) und das Lösungsmittel (84) oder (ii) das Lösungsmittel (84) an der Sonde (212) anhaften, und eine Hochspannungsbeaufschlagungseinheit, die ausgelegt ist, um die Sonde (212) mit einer Hochspannung zu beaufschlagen, an die (i) die Probe (S) und das Lösungsmittel (84) oder (ii) das Lösungsmittel (84) anhaften, und um zu bewirken, dass Komponenten in (i) der Probe (S) und dem Lösungsmittel oder (ii) dem Lösungsmittel (84) aufgrund eines Elektrospray-Phänomens an die Umgebungsatmosphäre abgegeben werden, und wobei:
in dem ersten Massenanalyseschritt die Antriebseinheit (11, 12) die Sonde (212) in eine Position bewegt, in der bewirkt wird, dass das Lösungsmittel (84), das nicht mit der Probe (S) in Kontakt steht, an der Sonde (212) anhaftet; und
in dem zweiten Massenanalyseschritt die Antriebseinheit (11, 12) die Sonde (212) in eine Position bewegt, in der die Probe (S), die an der Sonde (212) anhaftet, mit dem Lösungsmittel (84) in Kontakt gebracht wird.

3. Analyseverfahren nach Anspruch 1 oder 2, wobei
die Probe (S) und das Lösungsmittel (84) innerhalb einer Ionisierungskammer (214) der Ionisierungseinheit (21) angeordnet sind.

4. Analyseverfahren nach einem der Ansprüche 1 bis 3, wobei
die Messdaten, die der Probe (S) zugeordnet sind, durch Subtrahieren einer Detektionsintensität, die einem m/z-Wert in den ersten Messdaten entspricht, von einer Detektionsintensität, die einem m/z-Wert in den zweiten Messdaten entspricht, in dem Messdatenerzeugungsschritt erzeugt werden.

5. Analysevorrichtung (1), bereitgestellt mit einer Ionisierungseinheit (21) zum Ionisieren einer Probe (S), die in der Ionisierungseinheit (21) angeordnet ist, in einem Zustand, in dem die Probe (S) mit einem Lösungsmittel (84) in Kontakt ist, um eine Analyse durchzuführen, wobei die Analysevorrichtung (1) Folgendes umfasst:
eine Messeinheit (100), die ausgelegt ist, um eine erste Massenanalyse zum Erhalten von ersten Messdaten in der Ionisierungseinheit (21) der Analysevorrichtung (1) durchzuführen, wobei das Lösungsmittel (84) und die Probe (S) an unterschiedlichen Positionen in der Ionisierungseinheit (21) angeordnet werden, indem bewirkt wird, dass das Lösungsmittel (84), das nicht mit der Probe (S) in Kontakt ist, an einer Sonde (212) anhaftet, und dann Ionisieren des Lösungsmittels (84), das an der Sonde (212) anhaftet, um erzeugte Ionen durch Massenanalyse zu detektieren; und
eine zweite Massenanalyse, die nach der ersten Massenanalyse durchgeführt wird, des Erhaltens zweiter Messdaten, indem bewirkt wird, dass die Probe (S) an der Sonde (212) anhaftet, und indem bewirkt wird, dass die Probe (S), die an der Sonde (212) anhaftet, mit dem Lösungsmittel (84) in Kontakt gebracht wird, und dann Ionisieren des Lösungsmittels (84) und der Probe (S), die an der Sonde (212) anhaftet, um erzeugte Ionen durch Massenanalyse zu detektieren; und
ein Analysegerät (52), der ausgelegt ist, um Messdaten, die der Probe (S) zugeordnet sind, basierend auf den ersten Messdaten und den zweiten Messdaten zu erzeugen; und wobei
das Lösungsmittel (84) und die Probe (S), die an unterschiedlichen Positionen in der Ionisierungseinheit (21) angeordnet sind, ab dem Zeitpunkt, wenn die erste Messanalyse beginnt, bis zu dem Zeitpunkt, wenn die zweite Messanalyse endet, innerhalb der Ionisierungseinheit (21) verbleiben.

6. Programm zum Bewirken, dass eine Verarbeitungsvorrichtung Folgendes durchführt:
eine erste Massenanalysesteuerverarbeitung zum Erhalten von ersten Messdaten in der Ionisierungseinheit (21) einer Analysevorrichtung (1), wobei eine Probe (S) und ein Lösungsmittel (84) an unterschiedlichen Positionen in der Ionisierungseinheit (21) angeordnet werden, indem bewirkt wird, dass das Lösungsmittel (84), das nicht mit der Probe (S) in Kontakt steht, an einer Sonde (212) anhaftet, und dann Ionisieren des Lösungsmittels (84), das an der Sonde anhaftet, um erzeugte Ionen durch Massenanalyse zu detektieren;
eine zweite Massenanalysesteuerverarbeitung zum Erhalten von zweiten Messdaten, die nach der ersten Messanalysesteuerverarbeitung durchgeführt wird, indem bewirkt wird, dass die Probe (S) an der Sonde (212) anhaftet, und indem bewirkt wird, dass die Probe (S), die an der Sonde (212) anhaftet, mit dem Lösungsmittel (84) in Kontakt gebracht wird, und dann Ionisieren des Lösungsmittels (84) und der Probe (S), die an der Sonde (212) anhaftet, um erzeugte Ionen durch Massenanalyse zu detektieren; und
eine Messdatenerzeugungsverarbeitung zum Erzeugen von Messdaten, die der Probe (S) zugeordnet sind, basierend auf den ersten Messdaten und den zweiten Messdaten; und wobei
das Lösungsmittel (84) und die Probe (S), die an unterschiedlichen Positionen in der Ionisierungseinheit (21) angeordnet sind, ab dem Zeitpunkt, wenn die erste Messanalyse beginnt, bis zu dem Zeitpunkt, wenn die zweite Messanalyse endet, innerhalb der Ionisierungseinheit (21) verbleiben.

## Revendications

1. Procédé d'analyse pour ioniser un échantillon (S) agencé dans une unité d'ionisation (21) d'un dispositif d'analyse (1) dans un état dans lequel l'échantillon (S) est en contact avec un solvant (84) pour effectuer une analyse, le procédé comprenant :
une étape d'agencement consistant à agencer le solvant (84) et l'échantillon (S) dans différentes positions dans l'unité d'ionisation (21),
une première étape d'analyse de masse, effectuée après l'étape d'agencement, consistant à obtenir des premières données de mesure en amenant le solvant (84) qui n'est pas en contact avec l'échantillon (S) à venir en adhérence avec une sonde (212), puis à ioniser le solvant (84) venant en adhérence avec la sonde (212) pour détecter des ions générés par analyse de masse ;
une seconde étape d'analyse de masse, effectuée après la première étape d'analyse de masse, consistant à obtenir des secondes données de mesure en amenant l'échantillon (S) à adhérer à la sonde (212) et en amenant l'échantillon (S) venant en adhérence avec la sonde (212) à être amené en contact avec le solvant (84), puis à ioniser le solvant (84) et l'échantillon (S) venant en adhérence avec la sonde (212) pour détecter des ions générés par analyse de masse ; et
une étape de génération de données de mesure consistant à générer des données de mesure, associées à l'échantillon (S), sur la base des premières données de mesure et des secondes données de mesure ; et dans lequel
le solvant (84) et l'échantillon (S) agencés dans l'étape d'agencement restent à l'intérieur de l'unité d'ionisation (21) à partir du moment où la première étape d'analyse de masse commence jusqu'au moment où la seconde étape d'analyse de masse se termine.

2. Procédé d'analyse selon la revendication 1, dans lequel le dispositif d'analyse (1) est muni d'une unité d'entraînement (11, 12) configurée pour déplacer une sonde (212) ou un échantillon (S) dans une direction z, dans lequel la direction z est celle parallèle à la direction d'axe longitudinal de la sonde (212), et amener (i) l'échantillon (S) et le solvant (84) ou (ii) le solvant (84) à venir en adhérence avec la sonde (212), et une unité d'application de haute tension configurée pour appliquer une haute tension à la sonde (212) à laquelle (i) l'échantillon (S) et le solvant (84) ou (ii) le solvant (84) vient en adhérence avec et amène des composants dans (i) l'échantillon (S) et le solvant (84) ou (ii) le solvant (84) à être déchargés dans une atmosphère ambiante en raison d'un phénomène d'électro-nébulisation, et dans lequel :
dans la première étape d'analyse de masse, l'unité d'entraînement (11, 12) déplace la sonde (212) vers une position dans laquelle le solvant (84) qui n'est pas en contact avec l'échantillon (S) est amené à venir en adhérence avec la sonde (212) ; et
dans la seconde étape d'analyse de masse, l'unité d'entraînement (11, 12) déplace la sonde (212) vers une position dans laquelle l'échantillon (S) venant en adhérence avec la sonde (212) est mis en contact avec le solvant (84).

3. Procédé d'analyse selon la revendication 1 ou 2, dans lequel
l'échantillon (S) et le solvant (84) sont agencés à l'intérieur d'une chambre d'ionisation (214) de l'unité d'ionisation (21).

4. Procédé d'analyse selon l'une quelconque des revendications 1 à 3, dans lequel
les données de mesure associées à l'échantillon (S) sont générées en soustrayant une intensité de détection correspondant à une valeur m/z dans les premières données de mesure d'une intensité de détection correspondant à une valeur m/z dans les secondes données de mesure dans l'étape de génération de données de mesure.

5. Dispositif d'analyse (1), pourvu d'une unité d'ionisation (21), pour ioniser un échantillon (S) agencé dans l'unité d'ionisation (21) dans un état dans lequel l'échantillon (S) est en contact avec un solvant (84) pour effectuer une analyse, le dispositif d'analyse (1) comprenant :
une unité de mesure (100) configurée pour effectuer une première analyse de masse pour obtenir des premières données de mesure dans l'unité d'ionisation (21) du dispositif d'analyse (1) où le solvant (84) et l'échantillon (S) sont agencés dans des positions différentes dans l'unité d'ionisation (21), en amenant le solvant (84) n'étant pas en contact avec l'échantillon (S) à venir en adhérence avec une sonde (212), puis en ionisant le solvant (84) venant en adhérence avec la sonde (212) pour détecter des ions générés par analyse de masse, et une seconde analyse de masse, effectuée après la première analyse de masse, pour obtenir des secondes données de mesure en amenant l'échantillon (S) à venir en adhérence avec la sonde (212) et en amenant l'échantillon (S) venant en adhérence la sonde (212) à être amené en contact avec le solvant (84), puis en ionisant le solvant (84) et l'échantillon (S) venant en adhérence avec la sonde (212) pour détecter des ions générés par analyse de masse ; et
un analyseur (52) configuré pour générer des données de mesure, associées à l'échantillon (S), sur la base des premières données de mesure et des secondes données de mesure ; et dans lequel
le solvant (84) et l'échantillon (S) agencés dans différentes positions dans l'unité d'ionisation (21) restent à l'intérieur de l'unité d'ionisation (21) à partir du moment où la première analyse de masse commence jusqu'au moment où la seconde analyse de masse se termine.

6. Programme pour amener un dispositif de traitement à effectuer :
un premier traitement de commande d'analyse de masse pour obtenir des premières données de mesure dans une unité d'ionisation (21) d'un dispositif d'analyse (1) où un échantillon (S) et un solvant (84) sont agencés à dans différentes positions dans l'unité d'ionisation (21), en amenant le solvant (84) n'étant pas en contact avec l'échantillon (S) à venir en adhérence avec une sonde (212), puis en ionisant le solvant (84) venant en adhérence avec la sonde pour détecter des ions générés par analyse de masse ;
un second traitement de commande d'analyse de masse pour obtenir des secondes données de mesure, effectué après le premier traitement de commande d'analyse de masse, en amenant l'échantillon (S) à venir en adhérence avec la sonde (212) et en amenant l'échantillon (S) venant en adhérence avec la sonde (212) à être mis en contact avec le solvant (84), puis en ionisant le solvant (84) et l'échantillon (S) venant en adhérence avec la sonde (212) pour détecter des ions générés par analyse de masse ; et
un traitement de génération de données de mesure pour générer des données de mesure associées à l'échantillon (S), sur la base des premières données de mesure et des secondes données de mesure ; et dans lequel
le solvant (84) et l'échantillon (S) agencés dans différentes positions dans l'unité d'ionisation (21) restent à l'intérieur de l'unité d'ionisation (21) à partir du moment où la première analyse de masse commence jusqu'au moment où la seconde analyse de masse se termine.
